# NEUE EUROPÄISCHE PATENTSCHRIFT

(11) **EP 2 409 002 B2**
(45) Veröffentlichungstag und Bekanntmachung des Hinweises auf die Entscheidung über den Einspruch: **12.07.2017**
(45) Hinweis auf die Patenterteilung: 13.02.2013
(21) Anmeldenummer: 10718038.2
(22) Anmeldetag: 15.03.2010
(51) Int. Cl.: F01D 9/04, F01D 5/14

(54) **TANDEMSCHAUFELKONSTRUKTION**
TANDEM BLADE DESIGN
CONSTRUCTION D'AUBES EN TANDEM

(30) Priorität: 16.03.2009 DE 102009013399
(43) Veröffentlichungstag der Anmeldung: 25.01.2012
(73) Patentinhaber: MTU Aero Engines AG, 80995 München (DE)
(72) Erfinder: HOEGER, Martin, 85435 Erding (DE)
(74) Vertreter: Schlotter, Alexander Carolus Paul
(86) Internationale Anmeldenummer: PCT/DE2010/000269
(87) Internationale Veröffentlichungsnummer: WO 2010/105597

(56) Entgegenhaltungen:
- WO-A2-2010/105597
- DE-A1- 1 628 237
- DE-T2- 69 730 663
- DE-T2- 69 730 663
- DE-T2- 69 914 823
- DE-T2- 69 914 823
- US-A- 3 059 834
- US-A- 3 075 743
- US-A- 3 075 743
- US-A- 4 483 659
- US-A- 4 483 659
- US-A- 5 676 522
- US-A- 6 099 249
- US-B1- 6 350 103
- US-B2- 6 715 983
- SHOLZ N.: 'AERODYNAMIK DER SCHAUFELGITTER', 1965, VERLAG G. BRAUN, KARLSRUHE
- SMITH A.M.O.: 'HIGH LIFT AERODYNAMICS' JOURNAL OF AIRCRAFT Bd. 12, Nr. 6, 1975,

## Beschreibung

Die vorliegende Erfindung betrifft eine Tandemschaufelkonstruktion gemäß dem Oberbegriff des Patentanspruchs 1.

Generell wird bei einem Turboverdichter durch einen rotierenden Läufer nach den Gesetzen der Strömungsmechanik dem strömenden Fluid Energie zugesetzt. Diese Bauart arbeitet kontinuierlich und zeichnet sich in der Regel durch geringe Druckerhöhung pro Stufe und hohen Volumendurchsatz aus. Aus diesem Grund werden meistens mehrere Verdichterstufen in Serie geschaltet, welche jeweils aus, einen Rotor bildenden Laufschaufeln und, einen Stator bildenden Leitschaufeln bestehen. In den Leitschaufeln wird die je Stufe umgesetzte Enthalpie entweder ganz oder teilweise in Druckenergie umgesetzt. In den Laufschaufeln wird die Strömungsenergie durch die Umlenkung infolge einer Umfangskraft übertragen. Mit anderen Worten verringert der Stator einen Drall und wandelt ihn in Druck um, wobei der Rotor eine Arbeit in Form von Drall auf die Strömung überträgt.

Insbesondere bei einem Axialverdichter strömt das zu komprimierende Gas in paralleler Richtung zur Achse durch den Verdichter. Infolge der Querschnittserweiterung in den Schaufelkanälen und der Arbeitsübertragung steigen der Druck und die Temperatur an, während die Geschwindigkeit absinkt. Im sich drehenden Teil einer Verdichterstufe (Laufrad, Rotor) wird dem Fluid die für den weiteren Druckaufbau nötige kinetische Energie wieder zugeführt.

Um den Wirkungsgrad einer Verdichterstufe zu steigern, sind die vorderen Stufen moderner Verdichter insbesondere in Flugtriebwerken und Gasturbinen meist transsonisch ausgelegt, da hier die Temperaturen noch gering sind und bei gleicher Strömungsgeschwindigkeit eine höhere Mach-Zahl erhältlich ist. Im Fall eines solchen transsonischen Axialverdichters übersteigt demnach die Strömungsgeschwindigkeit im Relativsystem (bezogen auf eine rotierende Schaufel) mindestens lokal die Schallgeschwindigkeit.

Der Vorteil der transsonischen Auslegung besteht in den vergleichsweise hohen Leistungsdichten, was insbesondere bei Flugzeugtriebwerks-Verdichtern wichtig ist, da so das Gesamtsystem kompakter gehalten werden kann. Jedoch ist diese Baugruppe von Verdichtern durch komplexe Systeme von Verdichterstößen gekennzeichnet, die die Auslegung und den stabilen Betrieb des Verdichters erheblich erschweren. Nachteilig sind auch die hohen Verluste, die mit den Verdichtungsstößen einhergehen und welchen nur durch komplexe dreidimensionale Beschaufelungen sowie ausgefeilte Schaufelgeometrien begegnet werden kann.

So wird im Stand der Technik beispielsweise gemäß der EP 0 823 540 B1 beschrieben, dass wenn bei einem Axialverdichter ein Druckverhältnis in einer einzelnen Stufe den Wert von etwa 1,5 übersteigt, eine Stoßwelle zwischen benachbarten Rotorschaufeln entsteht, die von einer Vorderkante einer Druckseite einer vorauseilenden Rotorschaufel bis zu einem Zwischenabschnitt einer Saugseite der unmittelbar benachbarten, nacheilenden Rotorschaufel erzeugt wird. Demzufolge löst sich stromabwärts von der Stoßwelle ein Luftstrom (eine Grenzschicht) von der Saugseite der nacheilenden Rotorschaufel ab, wodurch die Leistung des Verdichters ganz erheblich gemindert wird. Um dieses Problem zu beseitigen, schlägt die EP 0 823 540 B1 die Anordnung eines Tandemschaufelgitters für den Überschallbereich vor, bei welchem die vorderen Schaufeln jeder Tandemschaufel so geformt und positioniert sind, dass eine Stoßwelle entlang einer Linie zwischen der Vorderkantenregion der Druckseite jeder vorderen Schaufel und der Hinterkantenregion der gegenüberliegenden Saugseite jeder hinteren Schaufel erzeugt wird, wobei die vordere Schaufel und die hintere Schaufel jeder Tandemschaufel so geformt und positioniert sind, dass ein Luftstrom der von einem Spalt zwischen der Hinterkante der vorderen Schaufel und der Vorderkante der hinteren Schaufel ausgeht, so auf die Saugseite der hinteren Schaufel strömt, dass darauf eine Grenzschicht aufrecht erhalten wird.

Durch diese Maßnahme ist es möglich, die vordere Schaufel so zu gestalten, dass der Entstehungsort der Stoßwelle in Richtung eines hinteren Abschnitts der Saugseite der vorderen Schaufel verschoben wird, wobei der Luftstrom vom Spalt zur Saugseite der hinteren Schaufel über die vordere Schaufel so reguliert wird, dass die Grenzschicht an der Saugseite der hinteren Schaufel aufrecht erhalten bleibt. Im Ergebnis wird durch die Tandemkonstruktion eine höhere Umlenkung bei insgesamt verringertem Gewicht sowie geringerer Baulänge erreicht, was zu besseren Wirkungsgraden führt. Ebenso wird der Arbeitsbereich der Beschaufelung verbessert.

Eine andere Ausführungs- form einer Tandemschaufelkanstruktion zeigt die US-3075743-A1.

Trotz dieser technischen Verbesserungen akkumulieren sich bei der Tandemschaufel der vorstehend beschriebenen Bauart die Verluste infolge des hierbei sich erhöhenden Strömungswiderstands, wodurch ein Teil der erzielbaren Leistungssteigerungen wieder vernichtet werden. Auch wurden bislang Tandembauformen mit konventionellen Profiltypen ausgeführt, da jede Schaufel für sich gesehen auf ein günstiges Umströmungsverhalten getrimmt wurde. Bei Betrachtung des Gesamtsystems der Tandembeschaufelung wird hierbei jedoch keine für die Tandemanordnung optimale Druckverteilung erzielt.

Angesichts dieses Stands der Technik ist es die Aufgabe der vorliegenden Erfindung, eine Tandemschaufelkonstruktion bereitzustellen, die einen höheren Wirkungsgrad hat.

Diese Aufgabe wird durch eine Tandemschaufelkonstruktion mit den Merkmalen des Patentanspruchs 1 gelöst.
Der Erfindung liegt demzufolge die grundsätzliche Überlegung zu Grunde, eine schaufelbezogene Aufgabentrennung vorzunehmen, dergestalt, dass der vorderen Schaufel die Hauptfunktion der Verarbeitung des Überschalls und der hinteren Schaufel die Hauptfunktion der Strömungsumlenkung zugewiesen wird, wobei die Schaufeln entsprechend der jeweils zugewiesenen Funktionen optimiert werden. Dieses Erfindungskonzept lässt sich konstruktiv umsetzen, wenn die hintere Schaufel relativ zur vorderen Schaufel derart positioniert und/oder profiliert wird, dass sie das Geschwindigkeitsniveau an der Hinterkante der vorderen Schaufel anhebt. Diese konstruktive Maßnahme schafft die Voraussetzung dafür, die vordere Schaufel funktionsbezogen, beispielsweise mit einer Überwölbung in Richtung deren Hinterkante auszubilden, ohne dass hierbei Rücksicht auf eine ggf. vorzeitige Ablösung der Grenzschicht infolge der Profilierung der vorderen Schaufel genommen werden muss. D.h. eine strömungstechnische Funktionsuntauglichkeit der vorderen Schaufel wird für die Optimierung der zugewiesenen Hauptfunktion bewusst in Kauf genommen und anschließend wieder aufgehoben, indem die hintere Schaufel funktionsbezogen profiliert und positioniert wird, derart, dass der auf deren Oberseite erzeugte Sog die von der vorderen Schaufel sich abzulösende Grenzschicht auf die Schaufeloberseite wieder zurückzieht und entsprechend umlenkt. D.h. die funktionsbezogen optimierte vordere Schaufel ist strömungstechnisch nur im Zusammenwirken mit der hinteren Schaufel funktionstüchtig.

Im Ergebnis kann eine gegenüber dem genannten Stand der Technik höhere aerodynamische Belastung bei hoher Überdeckung, d.h. kurzer Bauweise installiert werden. Dadurch werden effizientere, leichtere und auch kostengünstigere Axialverdichterbauformen möglich, was bis zur Einsparung einer ganzen Stufe führen kann.

Weitere vorteilhafte Ausgestaltungen der Erfindung sind dabei Gegenstand der Unteransprüche.

Die Erfindung wird nachstehend anhand eines bevorzugten Ausführungsbeispiels unter Bezugnahme auf die begleitenden Zeichnungen näher erläutert.
Fig. 1 zeigt die Prinzipdarstellung einer Tandemschaufelkonstruktion gemäß einem bevorzugten Ausführungsbeispiel der Erfindung mit charakteristischen Winkelangaben,
Fig. 2 zeigt den Profilverlauf der vorderen Schaufel der erfindungsgemäßen Tandemschaufelkonstruktion zur Darstellung einer Überwölbung sowie das Strömungsverhalten einer vorderen Schaufel der erfindungsgemäßen Tandemschaufelkonstruktion mit und ohne einer hinteren Schaufel und
Fig. 3 zeigt die der erfindungsgemäßen Tandemschaufelkonstruktion mit relevanten Krümmungsangaben.

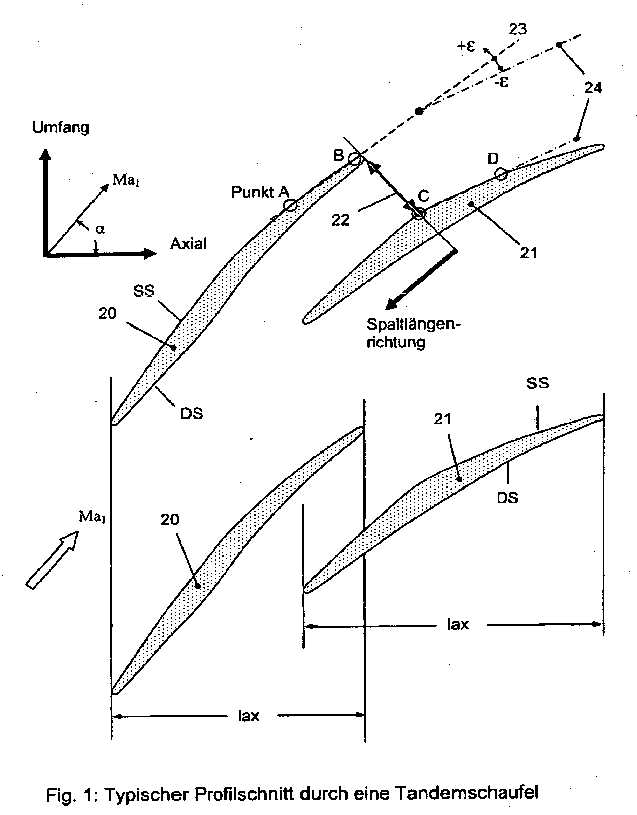

In der Fig. 1 ist eine erfindungsgemäße Tandemschaufelkonstruktion anhand eines bevorzugten Ausführungsbeispiels dargestellt. Die Tandemschaufelkonstruktion sieht demzufolge die Anordnung einer vorderen 20 sowie hinteren Schaufel 21 vor, die zwischen sich einen Schaufelspalt 22 ausbilden. Die hintere Schaufel ist hierfür in Umfangsrichtung sowie in Axialrichtung zur vorderen Schaufel versetzt derart, dass sich beide Schaufeln sowohl in Spaltlängenrichtung wie auch in Axialrichtung gesehen, teilweise, d.h. über eine vorbestimmte Profilsehnenlänge überlappen. Dieser Überlappungsbereich kann bis zu 50% der gesamten Profilsehnenlänge der vorderen oder hinteren Schaufel in Spaltbreitenrichtung gesehen, betragen.

Zur Kennzeichnung charakteristischer Winkelbereiche werden in Fig. 1 auf der Saugseite der vorderen Tandemschaufel 20 der Punkt A bei 75% axialer Sehnenlänge und der Punkt B bei 95% axialer Sehnenlänge festgelegt, durch die eine Gerade 23 definiert wird. Ebenso werden beim hinteren Tandemprofil 21 durch den Punkt C am Spalt (Ort des min. Abstands zur Schaufel 20) und den Punkt D im Abstand von 20% axialer Sehnenlänge vom Profil 21 stromab vom Punkt D auf der Saugseite des Profils 21 eine Gerade 24 definiert. Kennzeichnend für die vorliegende Bauart ist, dass der mittlere Winkel der Schaufel 21 stromab des Spalts 22 (Gerade 24) kleiner/gleich dem mittleren Winkel der geraden 23 im Hinterkantenbereich der vorderen Schaufel 20 ist (Gerade 23 entspricht nährungsweise dem Abströmwinkel der vorderen Schaufel 20 im Tandemgitter). Bevorzugter Weise soll der Winkel ε zwischen den Geraden 23 und 24 den Wert ε=-5°bis - -10° betragen.

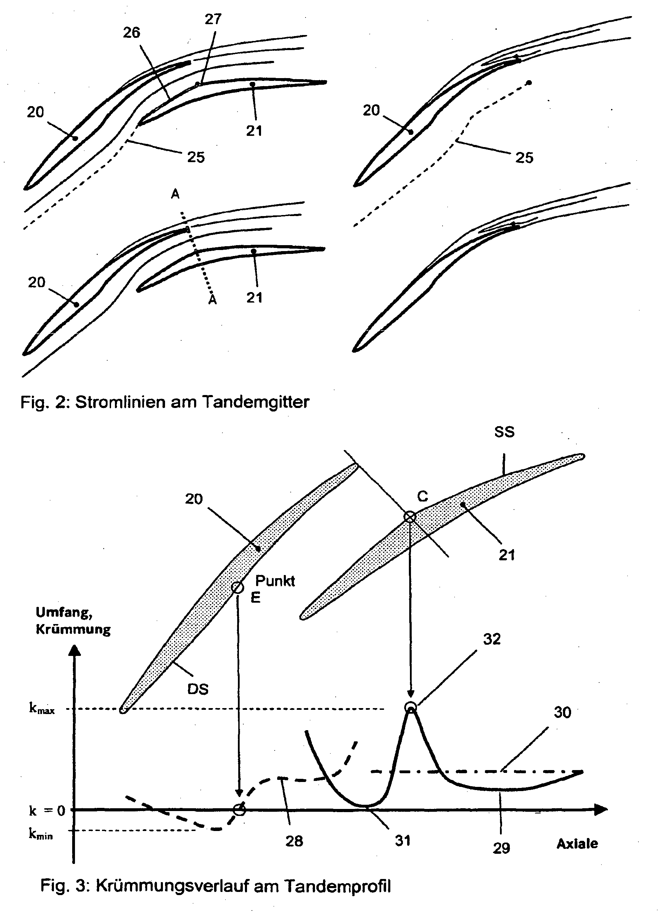

Die vordere Schaufel weist ein Querschnittsprofil auf, welches im hinteren Teil (vorzugsweise hintere 50% der Sehnenlänge) eine starke Überwölbung vorsieht. Der Begriff "stark" soll dabei definiert sein als ein Wert, bei welchem im beabsichtigten Arbeitsbereich der Schaufel ohne eine Wechselwirkung mit der hinteren Schaufel in jedem Fall mit einem Strömungsabriss in dem genannten hinteren Teil der vorderen Schaufel zu rechnen ist (siehe Fig. 2, links). Die hintere Schaufel besitzt gemäß der Fig. 2 einen Bereich 26 mit untypisch geringer oder sogar negativer Krümmung in den vorderen 25% der Sehnenlänge, gefolgt von einem kleinen Bereich mit hoher Krümmung 27, der zusammen mit der Hinterkante der vorderen Schaufel in einer Ebene A senkrecht zur Strömung (entspricht an dieser Stelle in etwa der Spaltbreitenrichtung) liegt. Durch die hierbei entstehende hohe Überdeckung (Überlappungsgrad) der vorderen und hinteren Schaufel tritt eine besonders günstige Wechselwirkung für die vordere Schaufel mit starker Überwölbung und die hintere Schaufel mit hoher Krümmung in der Ebene A ein.

Wie der Fig. 2 und 3 zu entnehmen ist, zeigt die vordere Schaufel im Mittenbereich der Sehnenlänge auf deren Druckseite eine hohe Krümmungsänderung. Hierbei ist die vordere Schaufel ferner so ausgeführt, dass ihre Stromlinie nahe der Druckseite einen ähnlichen Verlauf nimmt, wie die Staupunktstromlinie 27 der hinteren Schaufel samt Saugseitenstromlinie bis kurz vor dem Hinterkantenbereich der vorderen Schaufel. Dadurch kann eine maximale Umlenkung bei geringen Verlusten erreicht werden.

Die vorliegende Tandembeschaufelung ist weiter gekennzeichnet durch ihre besonderen Krümmungsverteilungen 28, 29 gemäß Fig. 3. So weist die vordere Schaufel auf der Druckseite DS einen Wendepunkt im Krümmungsverlauf im Punkt E auf. Der Punkt E liegt zwischen 40% und 95% der axialen Sehne vom Profil 20. Stromauf von Punkt E liegen negative Krümmungswerte vor. Bei der hinteren Schaufel 21 wird auf der Saugseite eine mittlere Krümmung 30 definiert. Kennzeichnend ist für die hintere Schaufel 21 ein Krümmungsminimum 31 stromauf von Punkt C, das einen Wert von kleiner als 0.7 fache des mittleren Krümmungswerts 30 aufweist. In geringem Abstand stromab folgt auf der Saugseite von Profil 21 ein Krümmungsmaximum 32, dessen Wert mehr als das 1.3 fache des mittleren Krümmungswerts der Saugseite von Profil 21 beträgt. Ein bevorzugter Wert für das Krümmungsminimum auf der Saugseite der hinteren Tandemschaufel ist Kₘᵢₙ = 0.

Mit der erfindungsgemäßen Tandemschaufelkonstruktion werden effizientere, leichtere und kostengünstigere Axialverdichterbauformen möglich. Es kann eventuell sogar eine ganze Verdichterstufe eingespart werden. Die Tandemschaufelkonstruktion gemäß der Erfindung lässt sich somit insbesondere bei Rotoren und/oder Statoren von Frontstufen eines Axialverdichters sowie Austrittsleiträdern einsetzen.

An dieser Stelle sei jedoch noch auf strömungstechnische Besonderheiten bei Statoren hingewiesen.

Bei transsonischen Verdichterstufen wird die optimale Rotorbauform durch die maximal zulässige Anström-Machzahl um MA1,max = 0.85 des nachfolgenden Stators begrenzt. Gelingt es, höhere Anström-Machzahlen am Stator zu verwirklichen, werden ein größeres Stufendruckverhältnis, eine optimale Vorleitradstellung (bzw. Drallverteilung vor dem stromauf liegenden Rotor) und dadurch bessere Wirkungsgrade möglich. Darüber hinaus könnte der für konventionelle transsonische Statoren übliche kleine Arbeitsbereich aufgeweitet.

Wie eingangs bereits ausgeführt wurde, weisen bisher bekannte Tandemschaufelkonstruktionen konventionelle Profiltypen auf, welche weder eine für die Tandemanordnung optimale Druckverteilung haben, noch hohe Anström-Machzahlen erlauben. Zudem müssen transsonische Statoren bisher infolge der Teillastanforderungen als Verstellstatoren ausgeführt werden. Es ergeben sich hierbei ein hoher Bauaufwand durch die Verstellaktuatorik, ein höheres Gewicht und zusätzliche Kosten.

Die Erfinderin hat herausgefunden, dass durch die Schaffung eines Tandemstators vorzugsweise bei Anwendung der erfindungsgemäßen Tandemschaufelkonstruktion eine Verdichterstufe mit einem hinsichtlich Druckverhältnis und Wirkungsgrad optimalen Reaktionsgrad ausgeführt werden kann. Es ergeben sich hierbei hohe Anström-Machzahlen Ma1 > 0.85, die nur durch die neue Statorbauform vorzugsweise mit der erfindungsgemäßen Tandemschaufelkonstruktion bei minimalen Verlustbeiwerten bewältigt werden. Die erfindungsgemäße Trennung der Umlenkaufgabe in einen Überschall- und einen Unterschallteil erlaubt es zudem, die Teillastanforderungen ohne Verstellung abzudekken. Dabei können infolge der vorstehend beschriebenen Sogwirkung der hinteren Statorschaufel hohe Zuströmwinkeländerungen ohne Verstellung bewältigt werden.

Für die Optimierung eines Axialverdichters einer Flugzeugturbine ist es daher möglich, entweder nur den Rotor mit einer Tandemschaufelkonstruktion gemäß der Erfindung zu bestücken und/oder den Stator als Tandemschaufelstator, vorzugsweise entsprechend der erfindungsgemäßen Tandemschaufelkonstruktion auszubilden. Kennzeichnend ist also der Entwurf für eine Verdichterstufe Bi-tandem oder einer Rotor-Tandemstator Konfiguration, die im Bereich der Statornabe schallnah angeströmt wird.

Die vorliegende Erfindung betrifft zusammenfassend eine Tandemschaufelkonstruktion für eine Axialströmungsmaschine bestehend aus einer vorderen sowie einer zu dieser im Umfangs- sowie in Axialrichtung versetzt angeordneten hinteren Schaufel. Die hintere Schaufel ist so profiliert und zur vorderen Schaufel positioniert, dass sie im vorbestimmten Arbeitsbereich in Wechselwirkung mit der vorderen Schaufel tretend das Geschwindigkeitsniveau an der Hinterkante der vorderen Schaufel anhebt.

## Patentansprüche

1. Tandemschaufelkonstruktion eines Axialverdichters mit transsonischer Auslegung für Flugtriebwerke und Gasturbinen bestehend aus einer vorderen sowie einer zu dieser in Umfangs- sowie in Axialrichtung versetzt angeordneten hinteren Schaufel, wobei die hintere Schaufel in Wechselwirkung mit der vorderen Schaufel das Geschwindigkeitsniveau an der Hinterkante der vorderen Schaufel anhebt, **dadurch gekennzeichnet, dass** sich die vordere und die hintere Schaufel sowohl in Axialrichtung als auch in Umfangsrichtung teilweise überlappen, dass die vordere Schaufel in ihrem hinteren Teil eine Überwölbung aufweist, wodurch ohne eine Wechselwirkung mit der hinteren Schaufel bei turbulenter Grenzschicht ein Strömungsabriss an der Saugseite der vorderen Schaufel auftreten würde, jedoch durch die von der hinteren Schaufel bewirkte Anhebung des Geschwindigkeitsniveaus ein Ablösen der Strömung an der Saugseite der vorderen Schaufel verhindert wird, dass die hintere Schaufel in ihrem vorderen Bereich mit einer geringen bis negativen Krümmung ausgebildet ist, gefolgt von einem mittleren Bereich mit hoher Krümmung, der zusammen mit der Hinterkante der vorderen Schaufel in einer Ebene A senkrecht zur Strömung liegt,
dass der Wert für das Krümmungsminimum weniger als das 0,7fache der mittleren Saugseitenkrümmung der hinteren Schaufel beträgt, und
dass die Krümmung des mittleren Bereichs etwa das 1,3fache der mittleren Krümmung der Saugseite der hinteren Schaufel beträgt.

2. Tandemschaufelkonstruktion nach Anspruch 1, **dadurch gekennzeichnet, dass** der Bereich der Überwölbung der vorderen Schaufel sich von 50% bis 100% ihrer Sehnenlänge erstreckt.

3. Tandemschaufelkonstruktion nach einem der Ansprüche 1 bis 2, **dadurch gekennzeichnet, dass** sich der gering bis negativ gekrümmte Bereich auf der Saugseite der hinteren Schaufel stromaufwärts des Krümmungsmaximums von etwa 2% bis 30% der Sehnenlänge der Schaufel erstreckt.

4. Tandemschaufelkonstruktion nach Anspruch 3, **dadurch gekennzeichnet, dass** sich der gering bis negativ gekrümmte Bereich auf der Saugseite der hinteren Schaufel stromaufwärts des Krümmungsmaximums über etwa 25% der Sehnenlänge der Schaufel erstreckt.

5. Tandemschaufelkonstruktion nach einem der vorstehenden Ansprüche, **dadurch gekennzeichnet, dass** die vordere Schaufel druckseitig am stromaufwärtigen Übergang zum überwölbten Bereich eine Änderung des Vorzeichens der Krümmung aufweist.

6. Tandemschaufelkonstruktion nach einem der vorstehenden Ansprüche, **dadurch gekennzeichnet, dass** der mittlere Winkel auf der Saugseite der vorderen Schaufel zwischen 75% und 95% axialer Sehnenlänge größer/gleich dem mittleren Winkel der Saugseite der hinteren Schaufel zwischen dem Krümmungsmaximum C und einem Punkt auf der Saugseite 20% der axialen Sehne stromab von C ist, wodurch der Abströmwinkel α der Schaufel 20 größer ist als der mittlere Saugseitenwinkel der Schaufel 21 stromab des Spalts.

7. Überschallstator einer Axialströmungsmaschine, **gekennzeichnet durch** eine Beschaufelung in Form einer Tandemschaufelkonstruktion gemäß einem der Ansprüche 1 bis 6.

## Claims

1. Tandem-blade configuration of an axial compressor of transonic design for aero engines and gas turbines, consisting of a front blade and also a rear blade arranged offset from the front blade in the circumferential and axial directions, wherein the rear blade, in interaction with the front blade, raises the speed level at the trailing edge of the front blade,
**characterised in that** the front and rear blades partly overlap both in the axial direction and in the circumferential direction, **in that** the front blade exhibits a vaulting in its rear part, by virtue of which, without an interaction with the rear blade in the case of a turbulent boundary layer, a flow separation on the suction side of the front blade would occur, but by virtue of the raising of the speed level brought about by the rear blade a separation of the flow on the suction side of the front blade is prevented,
**in that** the rear blade is formed with a slight to negative curvature in its front region, followed by a middle region having high curvature, which, together with the trailing edge of the front blade, lies in a plane A perpendicular to the flow,
**in that** the value of the minimum curvature amounts to less than 0.7 times the mean suction-side curvature of the rear blade, and
**in that** the curvature of the central region amounts to about 1.3 times the mean curvature of the suction side of the rear blade.

2. Tandem-blade configuration according to Claim 1, **characterised in that** the region of vaulting of the front blade extends from 50% to 100% of its chord length.

3. Tandem-blade configuration according to one of Claims 1 to 2, **characterised in that** the slightly to negatively curved region on the suction side of the rear blade extends upstream of the point of maximum curvature from about 2% to 30% of the chord length of the blade.

4. Tandem-blade configuration according to Claim 3, **characterised in that** the slightly to negatively curved region on the suction side of the rear blade extends upstream of the point of maximum curvature over about 25% of the chord length of the blade.

5. Tandem-blade configuration according to one of the preceding claims, **characterised in that** the front blade exhibits a change of algebraic sign of the curvature on the pressure side at the upstream transition to the vaulted region.

6. Tandem-blade configuration according to one of the preceding claims, **characterised in that** the mean angle on the suction side of the front blade between 75% and 95% of axial chord length is greater than or equal to the mean angle of the suction side of the rear blade between the point of maximum curvature C and a point on the suction side 20% of the axial chord downstream of C, by virtue of which the outflow angle α of the blade 20 is greater than the mean suction-side angle of the blade 21 downstream of the gap.

7. Supersonic stator of an axial-flow machine, **characterised by** a blading in the form of a tandem-blade configuration according to one of Claims 1 to 6.

## Revendications

1. Construction d'aubes en tandem d'un compresseur axial présentant une configuration transsonique pour des groupes motopropulseurs et des turbines à gaz, constituée d'une aube avant ainsi que d'une aube arrière disposée de manière décalée par rapport à l'aube avant aussi bien dans la direction périphérique que dans la direction axiale, l'aube arrière elevant en interaction avec l'aube avant le niveau de vitesse au niveau de l'arête arrière de l'aube avant,
**caractérisée en ce que** l'aube avant et l'aube arrière se chevauchent partiellement aussi bien dans la direction axiale que dans la direction périphérique, **en ce que** l'aube avant présente dans sa partie arrière une voûte, ce qui a pour effet que sans une interaction avec l'aube arrière en cas de couche limite turbulente, un d'écrochage d'écoulement au niveau du côté d'aspiration de l'aube avant apparaîtrait, ce qui toute-fois permet d'empêcher grâce à l'élévation du niveau de vitesse provoquée par l'aube arrière un détachement de l'écoulement au niveau du côté d'aspiration de l'aube avant,
**en ce que** l'aube arrière est réalisée dans sa zone avant avec une courbure faible à négative, la zone avant étant suivie d'une zone médiane présentant une courbure importante, laquelle zone médiane se trouve dans un plan A de manière perpendiculaire per rapport à l'écoulement conjointement avec l' arête arrière de l'aube avant,
**en ce que** la valeur minimale de la courbure est inférieure à 0,7 fois la courbure moyenne du côté d'aspiration de l'aube arrière, et **en ce que** la courbure de la zone médiane est égale à environ 1,3 fois la courbure moyenne du côté d'aspiration de l'aube arrière.

2. Construction d'aubes en tandem selon la revendication 1, **caractérisée en ce que** la zone de la voûte de l'aube avant d'etend sur 50 % à 100 % de sa longueur de corde.

3. Construction d'aubes en tandem selon l'une quelconque des revendications 1 à 2, **caractérisée en ce que** la zone présentant une courbure faible à négative s'étend sur le côté d'aspiration de l'aube arrière en amont de la courbure maximale sur environ 2 % à 30 % de la longueur de corde de l'aube.

4. Construction d'aubes en tandem selon la revendication 3, **caractérisée en ce que** la zone présentant une courbure faible à négative s'etend sur le côté d'aspiration de l'aube arrière en amont de la courbure maximale sur environ 25 % de la longueur de corde de l'aube.

5. Construction d'aubes en tandem selen l'une quelcongue des revendications précédentes, **caractérisée en ce que** l'aube avant présente côté pression au niveau de la zone de transition située en amont vers la zone voûtée, une modification du signe de la courbure.

6. Construction d'aubes en tandem selon l'une quelconque des revendications précédentes, **caractérisée en ce que** l'angle moyen sur le côté d'aspiration de l'aube avant sur 75 % à 95 % de la longueur de corde axiale est plus grand ou est égal à l'angle moyen du côté d'aspiration de l'aube arrière entre la courbure maximale C et un point sur le côté d'aspiration sur 20 % de la longueur de corde axiale en aval de C, ce grâce à quoi l'angle d'écoulement α de l'aube 20 est plus grand que l'angle moyen du côté d'aspiration de l'aube 21 en aval de la fente.

7. Stator supersonigue d'une turbomachine axiale, **caractérisé par** un aubage sous la forme d'une construction d'aubes en tandem selon l'une quelconque des revendications 1 à 6.
